# FASCICULE DE BREVET EUROPEEN

(11) **EP 4 062 476 B1**
(45) Date de publication et mention de la délivrance du brevet: **11.10.2023**
(21) Numéro de dépôt: 20823731.3
(22) Date de dépôt: 03.11.2020
(51) Int. Cl.: H01M 10/44, H01M 10/48, H02J 7/00

(54) **PROCEDE ET SYSTEME DE CONTROLE D'UNE BATTERIE ELECTRIQUE**
VERFAHREN UND SYSTEM ZUR STEUERUNG EINER ELEKTRISCHEN BATTERIE
METHOD AND SYSTEM FOR CONTROLLING AN ELECTRIC BATTERY

(30) Priorité: 20.11.2019 FR 1912969
(43) Date de publication de la demande: 28.09.2022
(73) Titulaire: Commissariat à l'Energie Atomique et aux Energies Alternatives, 75015 Paris (FR)
(72) Inventeur: TESSARD, Romain, 38054 GRENOBLE CEDEX 09 (FR)
(74) Mandataire: Cabinet Beaumont
(86) Numéro de dépôt international: PCT/EP2020/080775
(87) Numéro de publication internationale: WO 2021/099103

(56) Documents cités:
- WO-A1-2015/149186
- DE-A1-102018 203 164
- FR-A1- 2 970 821

## Description

### Domaine technique

La présente description concerne de façon générale le domaine des batteries électriques, et vise plus particulièrement la gestion du risque d'emballement thermique dans une batterie électrique.

### Technique antérieure

Une batterie électrique comprend classiquement une pluralité de cellules élémentaires de stockage d'énergie électrique rechargeables, typiquement des accumulateurs électrochimiques, reliées en série et/ou en parallèle entre une borne positive et une borne négative de fourniture de tension de la batterie. Lors de phases de décharge de la batterie, un courant circule de la borne positive vers la borne négative de la batterie, à travers une charge à alimenter. Lors de phases de recharge de la batterie, un chargeur applique à la batterie un courant circulant de la borne négative vers la borne positive de la batterie (à travers le chargeur). Une batterie comprend en outre classiquement un dispositif électronique de gestion, généralement appelé BMS (de l'anglais "Battery Management System", signifiant "système de gestion de batterie"), relié aux cellules de la batterie, qui peut mettre en oeuvre des fonctions diverses telles que des fonctions d'équilibrage des cellules, des fonctions de protection, etc.

Les cellules de stockage d'une batterie électrique ont tendance à s'échauffer par effet Joule lors des phases de recharge et de décharge de la batterie. Les cellules doivent toutefois, sous peine de se dégrader, être maintenues dans des plages de température spécifiques, dépendant notamment du type de cellule considéré. En particulier, lorsque la température interne d'une cellule dépasse un certain seuil, des réactions chimiques de dégradation des matériaux constituant la cellule peuvent s'amorcer, conduisant à un auto-échauffement de la cellule. Ce phénomène, appelé emballement thermique, est particulièrement dangereux, car, une fois amorcé, il est très difficile, voire impossible, à interrompre, et peut conduire à l'explosion de la cellule.

Il serait souhaitable d'améliorer la gestion du risque d'emballement thermique dans une batterie électrique. Les documents WO2015/149186 et DE102018203164 décrivent des exemples de procédés et dispositifs pour éviter un emballement thermique dans une batterie.

### Résumé de l'invention

Pour cela, l'invention prévoit un procédé de contrôle d'une batterie électrique comprenant une ou plusieurs cellules élémentaires de stockage d'énergie électrique, ce procédé comportant, pour chaque cellule, les étapes suivantes :
a) mesurer une grandeur représentative de la température de la cellule ;
b) mesurer une grandeur représentative de l'état de charge de la cellule ; et
c) déterminer, en fonction de l'état de charge de la cellule, en utilisant une fonction mathématique prédéterminée ou une table de correspondance prédéterminée, un premier seuil correspondant à une température d'amorçage d'un emballement thermique de la cellule ; et
lorsque la température de la cellule dépasse le premier seuil, activer un circuit de décharge de la cellule.

Selon un mode de réalisation, le premier seuil est une fonction décroissante de l'état de charge de la cellule.

Selon un mode de réalisation, le circuit de décharge de chaque cellule comprend, entre une borne positive et une borne négative de la cellule, une association en série d'un interrupteur et d'une résistance de décharge, l'activation du circuit de décharge comprenant la fermeture de l'interrupteur de façon à décharger la cellule dans la résistance de décharge.

Selon un mode de réalisation, le circuit de décharge est adapté à décharger la cellule dans une ou plusieurs autres cellules de la batterie.

Selon un mode de réalisation, le procédé comprend en outre, lorsque la température de la cellule dépasse le premier seuil, en parallèle de l'activation du circuit de décharge, l'émission d'un signal sonore et/ou visuel à l'attention de l'utilisateur.

L'invention prévoit également un dispositif électronique de gestion d'une batterie électrique comprenant une ou plusieurs cellules élémentaires de stockage d'énergie électrique, ce dispositif étant configuré pour mettre en oeuvre un procédé de contrôle tel que défini ci-dessus.

L'invention prévoit également une batterie électrique comportant une ou plusieurs cellules élémentaires de stockage d'énergie électrique, et un dispositif électronique de gestion configuré pour mettre un oeuvre un procédé de contrôle tel que défini ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un diagramme illustrant le comportement en température d'une cellule élémentaire de stockage d'une batterie électrique ;
la figure 2 est un autre diagramme illustrant le comportement en température d'une cellule élémentaire de stockage d'une batterie électrique ;
la figure 3 est un logigramme illustrant un exemple d'un procédé de contrôle d'une batterie électrique selon un mode de réalisation ;
la figure 4 est un schéma électrique simplifié d'une batterie électrique munie d'un dispositif électronique de gestion adapté à mettre en oeuvre le procédé de la figure 3 ; et
la figure 5 est un diagramme illustrant le fonctionnement du procédé de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la réalisation des cellules élémentaires des batteries décrites n'a pas été détaillée, les modes de réalisation décrits étant compatibles avec la plupart des technologies connues de réalisation de cellules élémentaires de batterie électrique. De plus, la réalisation du dispositif électronique de gestion des batteries décrites n'a pas été détaillée, la réalisation du dispositif de gestion étant à la portée de l'homme du métier à partir des indications fonctionnelles de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

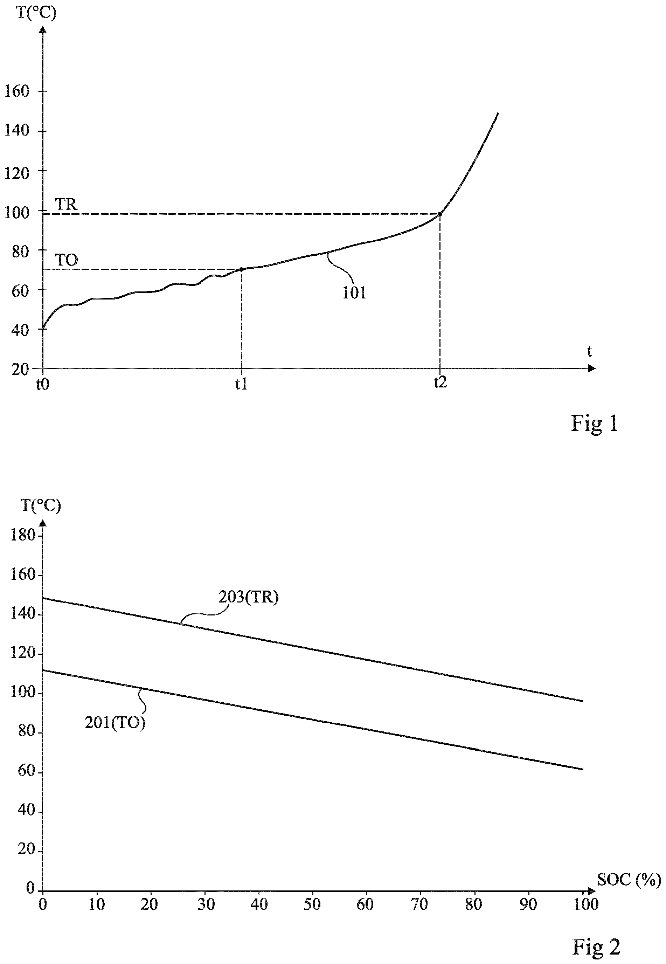

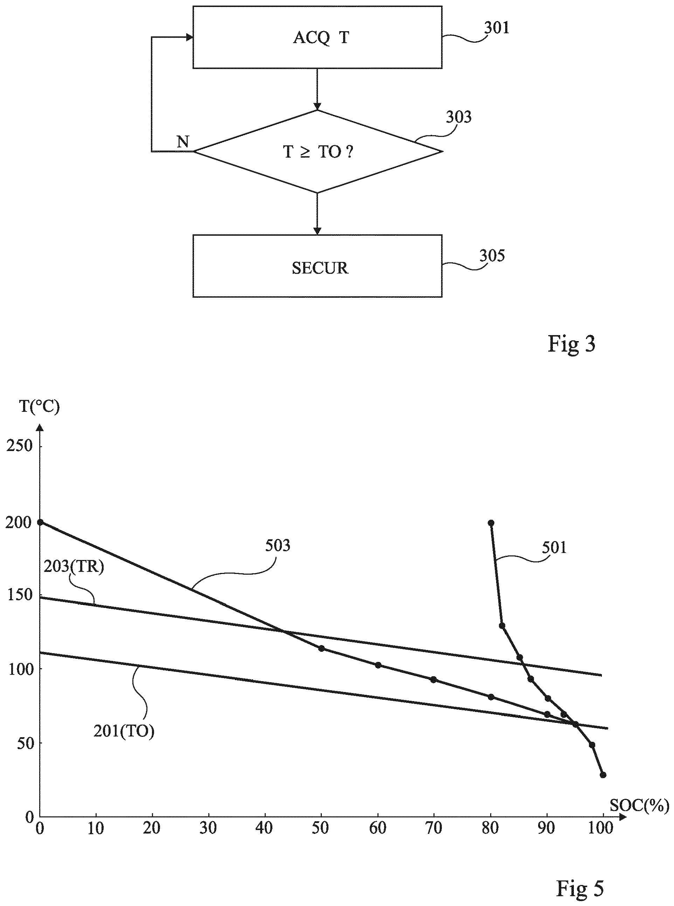

La figure 1 est un diagramme illustrant le comportement en température d'une cellule élémentaire de stockage d'une batterie électrique. Le diagramme de la figure 1, ainsi que les diagrammes des figures 2 et 5, ont été tracés pour une cellule lithium-ion de type NMC/Graphite, par exemple du type désigné par la dénomination commerciale 18650. Bien entendu, les modes de réalisation décrits ne se limitent pas à cette cellule particulière mais s'appliquent plus généralement à tous les types et à toutes les technologies de cellules électrochimiques, et en particulier aux cellules lithium-ion.

La figure 1 comprend une courbe 101 représentant l'évolution, en fonction du temps t (en abscisse), de la température T (en ordonnée, en °C), d'une cellule élémentaire de batterie, lors d'une phase de caractérisation au cours de laquelle on augmente progressivement la température de la cellule jusqu'à provoquer un emballement thermique de cette dernière.

Entre un instant t0 et un instant t1 de la phase de caractérisation, la température T de la cellule est dans une plage normale d'utilisation, ne présentant pas de risque majeur pour l'utilisateur. En particulier, dans cette zone de fonctionnement, la température de la cellule peut aisément être abaissée, par exemple par simple interruption du courant de décharge ou de recharge de la cellule.

A l'instant t1, la température T de la cellule atteint une valeur T0 correspondant à une température d'amorçage de l'emballement thermique de la cellule. A partir de cette température, la cellule commence à s'auto-échauffer sous l'effet de réactions chimiques de dégradation des matériaux la constituant. On observe sur la figure 1, à l'instant t1, une première inflexion de la courbe 101, correspondant à une légère accélération de la montée en température de la cellule, caractéristique du franchissement du seuil T0 d'amorçage de l'emballement thermique.

Entre l'instant t1 et un instant t2, l'augmentation de température liée à l'emballement thermique reste limitée. Autrement dit, l'auto-échauffement de la cellule sous l'effet des réactions de dégradation des matériaux la constituant est relativement lent. Toutefois, à ce stade, l'emballement thermique ne peut déjà plus être interrompu, sauf à disposer d'un système de refroidissement ou d'un système de gestion thermique efficace permettant de compenser l'apport calorique produit par les réactions chimiques. On notera que dans cette zone de fonctionnement (entre les instants t1 et t2), la cellule reste fonctionnelle, c'est-à-dire qu'elle peut continuer à fournir un courant électrique à un dispositif à alimenter.

A l'instant t2, la température de la cellule atteint une valeur TR correspondant à une température d'amorçage d'une phase d'accélération de l'emballement thermique. On observe sur la figure 1, à l'instant t2, une deuxième inflexion de la courbe 101, correspondant à une forte accélération de la montée en température de la cellule, caractéristique du franchissement du seuil TR. Une fois le seuil TR franchi, l'emballement thermique devient très rapide, et conduit rapidement à l'explosion de la cellule. A partir du seuil TR, la cellule n'est plus fonctionnelle, c'est-à-dire qu'elle ne peut plus délivrer de courant.

Pour un type de cellule élémentaire donné, les seuils de température T0 et TR peuvent être déterminés par des essais de caractérisation, en laboratoire, dans des conditions permettant d'assurer la sécurité des opérateurs.

En pratique, on constate que ces seuils sont dépendant de l'état de charge ou SOC - de l'anglais "State of Charge" de la cellule, qui peut être défini comme étant le rapport entre la charge contenue dans la cellule et la capacité maximale de stockage de la cellule. Plus particulièrement, plus le SOC de la cellule est élevé, plus les seuils TO et TR sont bas, et inversement.

La figure 2 est un diagramme illustrant ce phénomène. Plus particulièrement, le diagramme de la figure 2 comprend une courbe 201 représentant l'évolution du seuil d'amorçage T0 de l'emballement thermique d'une cellule élémentaire (en ordonnée, en °C), en fonction du SOC de la cellule (en abscisse, en pourcents). Le diagramme de la figure 2 comprend en outre une courbe 203 représentant l'évolution du seuil TR d'accélération de l'emballement thermique de la cellule (en °C, en ordonnée) en fonction du SOC de la cellule (en abscisse, en pourcents).

Dans cet exemple, les courbes 201 et 202 sont sensiblement linéaires et parallèles. Plus particulièrement, dans cet exemple, la température d'amorçage T0 de l'emballement thermique présente un maximum de l'ordre de 110°C pour un SOC de 0%, et atteint un minimum de l'ordre de 60°C pour un SOC de 100%. De façon similaire, le seuil TR d'accélération de l'emballement thermique présente un maximum de l'ordre de 150°C pour un SOC de 0% et atteint un minimum de l'ordre de 100°C pour un SOC de 100%.

Selon un aspect d'un mode de réalisation, on prévoit d'exploiter la propriété de décroissance des seuils T0 et TR en fonction du SOC pour, lorsque que l'amorçage d'un emballement thermique (franchissement du seuil T0 par une cellule) est détecté, augmenter le temps disponible pour avertir l'utilisateur et lui permettre de se mettre en sécurité.

La figure 3 est un logigramme illustrant un exemple d'un procédé de contrôle d'une batterie électrique selon un mode de réalisation.

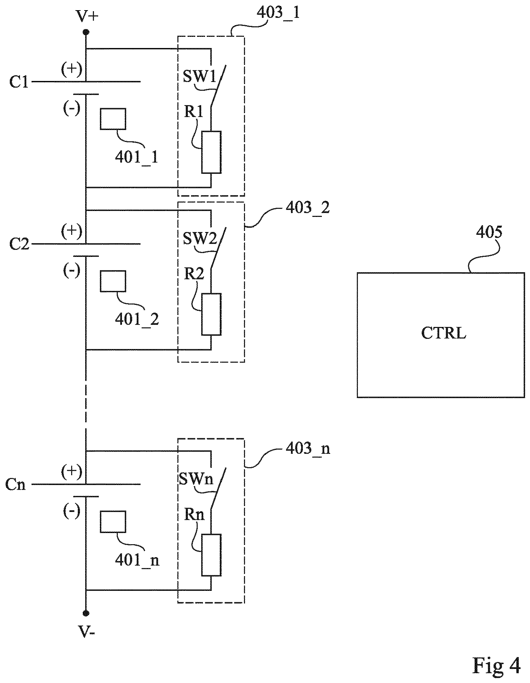

On considère dans cet exemple une batterie du type illustré en figure 4, comportant n cellules C1, ..., Cn reliées en série entre une borne positive V+ et une borne négative V- de la batterie, avec n entier supérieur ou égal à 2, par exemple supérieur ou égal à 3.

La batterie comprend en outre un dispositif électronique de gestion, seulement partiellement détaillé sur la figure 4, couplé aux cellules C1, C2,..., Cn. Le dispositif électronique de gestion peut comprendre des capteurs et circuits adaptés à mettre en oeuvre des fonctions diverses telles que des fonctions d'équilibrage des cellules, des fonctions de protection, etc. Dans l'exemple considéré, le dispositif électronique de gestion comprend un ensemble 401 d'un ou plusieurs capteurs adapté à mesurer, pour chacune des n cellules, une grandeur représentative de la température T de la cellule. Plus particulièrement, dans l'exemple représenté, l'ensemble 401 comprend n capteurs de température 401_1, 401_2, ... 401_n couplés thermiquement respectivement aux cellules C1, ..., Cn. Dans l'exemple considéré, le dispositif électronique de gestion comprend en outre un circuit de décharge 403 commandable pour décharger individuellement ou collectivement les n cellules C1, ... Cn de la batterie. Dans l'exemple représenté, le circuit 403 comprend n circuits de décharge individuels 403_1, 403_2, ... 403_n connectés respectivement aux bornes des cellules C1, ... Cn. A titre d'exemple, chaque circuit de décharge individuel 403_i, avec i entier allant de 1 à n, comprend une association en série d'un interrupteur commandable SWi (SW1, SW2, ... SWn), par exemple un transistor, par exemple un transistor MOS, et d'une résistance Ri (R1, R2, ... Rn), reliée en parallèle de la cellule Ci entre une borne positive (+) et une borne négative (-) de la cellule Ci. Dans l'exemple représenté, l'interrupteur SWi a une première borne de conduction reliée, par exemple connectée, à la borne positive (+) de la cellule Ci et une deuxième borne de conduction reliée, par exemple connectée, à une première extrémité de la résistance Ri, la deuxième extrémité de la résistance Ri étant reliée, par exemple connectée, à la borne négative (-) de la cellule Ci. Les circuits de décharge individuels 403_1, ...., 403_n sont par exemple identiques aux dispersions de fabrication près. Le dispositif électronique de gestion peut en outre comprendre une unité de traitement et de contrôle 405 (CTRL), comprenant par exemple un microprocesseur. L'unité 405 est notamment adaptée à lire les valeurs de température mesurées par les capteurs 401_i, et à commander les interrupteurs SWi des circuits de décharge 403_i. Dans l'exemple considéré, l'unité de traitement et de contrôle 405 est en outre adaptée à déterminer à tout instant, pour chaque cellule Ci, une valeur représentative de l'état de charge (SOC) de la cellule. Pour cela, le dispositif électronique de gestion peut comporter un ou plusieurs capteurs additionnels, non détaillés, par exemple un ou plusieurs capteurs de tension et/ou un ou plusieurs compteurs coulométriques, reliés à l'unité de traitement et de contrôle.

Le dispositif électronique de gestion est configuré pour mettre en oeuvre le procédé de la figure 3.

Le procédé de la figure 3 est un procédé de sécurité visant à détecter l'amorçage d'un emballement thermique, et, lorsqu'un emballement thermique se produit, à ralentir l'emballement thermique pour augmenter le temps disponible pour avertir l'utilisateur et lui permettre de se mettre en sécurité. Le procédé de la figure 3 peut être mis en oeuvre de façon continue, en parallèle des autres procédés mis en oeuvre par le dispositif électronique de gestion pour le fonctionnement normal de la batterie.

Le procédé de la figure 3 comprend une étape 301 (ACQ T) de mesure, pour chaque cellule Ci, d'une grandeur représentative de la température T de la cellule. La mesure peut être effectuée au moyen du dispositif de mesure 401. Les données mesurées sont collectées par l'unité de traitement et de contrôle 405.

Après l'étape 301, lors d'une étape 303 (T ≥ T0 ?), l'unité de traitement et de contrôle 405 détermine, pour chaque cellule Ci, si la température T de la cellule est, ou non, supérieure ou égale au seuil T0 d'amorçage de l'emballement thermique. Pour cela, l'unité de traitement et de contrôle 405 détermine le SOC de la cellule. En effet, comme expliqué ci-dessus en relation avec la figure 2, le seuil T0 dépend de l'état de charge de la cellule. Une fois le SOC déterminé, l'unité de traitement et de contrôle 405 utilise une courbe caractéristique telle que la courbe 201 de la figure 2, pour déterminer le seuil T0 d'amorçage d'emballement thermique de la cellule. La courbe caractéristique est par exemple déterminée en laboratoire lors d'une phase préalable de caractérisation du type de cellule utilisé dans la batterie, et stockée dans le dispositif électronique de gestion de la batterie, par exemple dans une mémoire de l'unité de traitement et de contrôle 405, par exemple sous la forme d'une équation mathématique ou d'une table de correspondance.

Si, à l'étape 303, l'unité de traitement et de contrôle 405 détermine que, pour chaque cellule Ci de la batterie, la température T de la cellule est inférieure au seuil T0 d'amorçage de l'emballement thermique de la cellule (N), les étapes 301 puis 303 sont réitérées de façon à continuer à surveiller l'évolution de la température des cellules.

Si, à l'étape 303, l'unité de traitement et de contrôle 405 détermine que la température T d'une cellule est supérieure ou égale au seuil T0 d'amorçage de l'emballement thermique de la cellule (Y), le dispositif électronique de gestion met en oeuvre une étape 305 (SECUR) de sécurisation de la cellule Ci concernée. Pour cela, l'unité de traitement et de contrôle 405 commande la décharge de la cellule Ci, via le circuit de décharge associé 403_i, en vue de ralentir l'emballement thermique. Plus particulièrement, dans l'exemple de la figure 4, l'unité de traitement et de contrôle 405 commande la fermeture de l'interrupteur SWi, ce qui conduit à la décharge de la cellule dans la résistance Ri. Ceci permet de diminuer le SOC de la cellule, et donc de retarder le franchissement du seuil TR d'accélération de l'emballement thermique de la cellule. En effet, comme expliqué ci-dessus en relation avec la figure 2, le seuil TR d'accélération de l'emballement thermique est d'autant plus élevé que le SOC de la cellule est faible. Ceci permet en outre d'augmenter le temps pendant lequel l'équipement alimenté par la batterie reste fonctionnel. En effet, comme expliqué ci-dessus en relation avec la figure 2, tant que la cellule n'atteint pas le seuil TR, cette dernière peut continuer à délivrer un courant. Ainsi, l'équipement continue d'être alimenté. Par exemple, dans le cas d'un véhicule électrique, ceci permet de laisser le temps à l'utilisateur de garer son véhicule dans un endroit sécurisé et de s'en extraire. Une fois le seuil TR franchi, la cellule cesse en revanche d'être fonctionnelle et l'équipement n'est plus alimenté. Lors de l'étape 305, en parallèle de la décharge de la cellule, l'unité de traitement et de contrôle 405 peut en outre commander l'émission d'un signal d'alerte, par exemple un signal sonore et/ou un signal visuel, à l'attention de l'utilisateur.

La figure 5 est un diagramme illustrant le fonctionnement du procédé de la figure 3. Sur la figure 5, on a reproduit les courbes 201 et 203 de la figure 2, illustrant respectivement l'évolution, en fonction du SOC, du seuil T0 d'amorçage de l'emballement thermique d'une cellule et du seuil TR d'accélération de l'emballement thermique de la cellule. On a de plus tracé, sur la figure 5, deux courbes 501 et 503 représentant l'évolution de la température et du SOC d'une cellule dans une situation d'emballement thermique. La courbe 501 correspond à une cellule à laquelle le procédé de la figure 3 n'est pas appliqué, tandis que la courbe 503 correspond à une cellule à laquelle le procédé de la figure 3 est appliqué.

Dans les deux cas, on part dans cet exemple d'un SOC de 100%. Peu après le début de la décharge, le seuil T0 d'amorçage de l'emballement thermique est atteint pour un SOC d'environ 95%. Jusqu'à ce stade, les courbes 501 et 503 sont confondues.

Dans le cas où le procédé de la figure 3 n'est pas appliqué (courbe 501), la décharge se poursuit et la cellule atteint très rapidement le seuil TR d'accélération de l'emballement thermique, pour un SOC d'environ 85%. La température de la cellule monte alors très rapidement, jusqu'à éventuellement provoquer l'explosion de la cellule.

Dans le cas où le procédé de la figure 3 est appliqué (courbe 501), après le franchissement du seuil T0, le SOC de la cellule est fortement abaissé du fait de l'activation du circuit de décharge de la cellule. Ceci conduit à augmenter significativement le seuil TR d'accélération de l'emballement thermique. Dans l'exemple représenté, le seuil TR est atteint pour un SOC d'environ 45%. En pratique, ceci permet d'augmenter significativement le temps disponible pour l'utilisateur entre le franchissement du seuil T0 et le franchissement du seuil TR. On notera que selon la technologique de cellules considérée, si le SOC de la cellule est ramené à une valeur suffisamment basse, par exemple inférieure à 20%, l'explosion de la cellule pourra éventuellement être évitée.

De façon avantageuse, les circuits de décharge 403_i des cellules peuvent comprendre des éléments communs avec les circuits d'équilibrage généralement présents dans un dispositif électronique de gestion d'une batterie comportant une pluralité de cellules connectées en série. En particulier, les résistances Ri des circuits de décharge 403_i peuvent également servir de résistances d'équilibrage lors du fonctionnement normal de la batterie. On notera toutefois que, pour obtenir une décharge suffisamment rapide des cellules lors de l'étape 305 du procédé de la figure 3, il convient que les résistances Ri soient relativement faibles. En général, les résistances d'équilibrage sont quant à elles relativement élevées. Pour satisfaire les exigences relatives à ces deux fonctions (décharge rapide en cas d'emballement thermique et équilibrage), on pourra choisir des résistances Ri de valeur faible, et commander les interrupteurs SWi selon un procédé de modulation en largeur d'impulsion lors des phases d'équilibrage.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que l'on ait décrit ci-dessus un exemple d'application du procédé de contrôle à une batterie comportant plusieurs cellules élémentaires connectées en série, les modes de réalisation décrits ne se limitent pas à ce cas particulier. La personne du métier saura adapter le procédé décrit à d'autres configurations de batteries, et notamment à une batterie comportant une unique cellule élémentaire, par exemple une batterie de cigarette électronique.

De plus, les modes de réalisation décrits ne se limitent pas à l'exemple particulier d'agencement des capteurs de température et des circuits de décharge décrit en relation avec la figure 4.

En particulier, bien que l'on ait décrit ci-dessus un exemple de mise en oeuvre dans lequel la décharge d'une cellule sujette à un emballement thermique est réalisée dans une résistance reliée en parallèle de la cellule, les modes de réalisation décrits ne se limitent pas à ce cas particulier. A titre d'exemple, la décharge de la cellule défaillante pourra être réalisée dans une ou plusieurs autres cellules de la batterie, via des circuits de décharge adaptés.

Par ailleurs, pour améliorer le contrôle de l'emballement thermique, la vitesse de décharge de la cellule à l'étape 305 du procédé de la figure 3 peut être adaptée en fonction du SOC de la cellule, et/ou en fonction de la vitesse constatée d'évolution de la température de la cellule. De plus, les courbes caractéristiques 201 et/ou 203 utilisées à l'étape 303 du procédé de la figure 3 peuvent être adaptées en fonction de l'état de vieillissement ou SOH (de l'anglais "State Of Health" - étant de santé) de la cellule. A titre d'exemple le dispositif électronique de gestion peut mémoriser plusieurs courbes 201 et/ou plusieurs courbes 203 correspondant à des SOH différents. A titre de variante, un coefficient de pondération fonction du SOH peut être appliqué par l'unité de traitement et de contrôle 405 lors de la détermination des seuils T0 et/ou TR.

## Revendications

1. Procédé de contrôle d'une batterie électrique comprenant une ou plusieurs cellules élémentaires (Ci) de stockage d'énergie électrique, ce procédé comportant, pour chaque cellule (Ci), les étapes suivantes :
a) mesurer une grandeur représentative de la température (T) de la cellule ;
b) mesurer une grandeur représentative de l'état de charge de la cellule ;
c) déterminer, en fonction de l'état de charge de la cellule, en utilisant une fonction mathématique prédéterminée ou une table de correspondance prédéterminée, un premier seuil (T0) correspondant à une température d'amorçage d'un emballement thermique de la cellule ; et
lorsque la température de la cellule dépasse le premier seuil (T0), activer un circuit de décharge (403_i) de la cellule.

2. Procédé selon la revendication 1, dans lequel le premier seuil (T0) est une fonction décroissante de l'état de charge de la cellule (Ci).

3. Procédé selon la revendication 1 ou 2, dans lequel le circuit de décharge (403_i) de chaque cellule (Ci) comprend, entre une borne positive et une borne négative de la cellule, une association en série d'un interrupteur (SWi) et d'une résistance de décharge (Ri), l'activation du circuit de décharge (403_i) comprenant la fermeture de l'interrupteur (SWi) de façon à décharger la cellule (Ci) dans la résistance de décharge (Ri).

4. Procédé selon l'une quelconque des revendications 1 à 3, dans lequel le circuit de décharge est adapté à décharger la cellule (Ci) dans une ou plusieurs autres cellules de la batterie.

5. Procédé selon l'une quelconque des revendications 1 à 4, comprenant en outre, lorsque la température de la cellule dépasse le premier seuil (T0), en parallèle de l'activation du circuit de décharge, l'émission d'un signal sonore et/ou visuel à l'attention de l'utilisateur.

6. Dispositif électronique de gestion d'une batterie électrique comprenant une ou plusieurs cellules élémentaires (Ci) de stockage d'énergie électrique, ce dispositif étant configuré pour mettre en oeuvre un procédé de contrôle selon l'une quelconque des revendications 1 à 5.

7. Batterie électrique comportant une ou plusieurs cellules élémentaires (Ci) de stockage d'énergie électrique, et un dispositif électronique de gestion configuré pour mettre un oeuvre un procédé de contrôle selon l'une quelconque des revendications 1 à 5.

## Patentansprüche

1. Verfahren zum Steuern einer elektrischen Batterie, die eine oder mehrere Elementarzellen (Ci) zum Speichern elektrischer Energie aufweist, wobei dieses Verfahren, für jede Zelle (Ci), die folgenden Schritte beinhaltet:
a) Messen einer Größe, die für die Temperatur (T) der Zelle repräsentativ ist;
b) Messen einer Größe, die für den Ladezustand der Zelle repräsentativ ist;
c) Bestimmen, und zwar als eine Funktion des Ladezustands der Zelle unter Verwendung einer vorbestimmten mathematischen Funktion oder einer vorbestimmten Korrelationstabelle, eines ersten vorbestimmten Schwellenwerts (T0), der einer Temperatur entspricht, in der ein thermisches Durchgehen der Zelle auftritt; und
wenn die Temperatur der Zelle den ersten Schwellenwert (T0) überschreitet, Aktivieren einer Entladeschaltung (403_i) der Zelle.

2. Verfahren nach Anspruch 1, wobei der erste Schwellenwert (T0) eine abnehmende Funktion des Ladezustands der Zelle (Ci) ist.

3. Verfahren nach Anspruch 1 oder 2, wobei die Entladeschaltung (403_i) jeder Zelle (Ci) zwischen einem positiven Anschluss und einem negativen Anschluss der Zelle eine Reihenschaltung aus einem Schalter (SWi) und einem Entladewiderstand (Ri) aufweist, wobei Aktivieren der Entladeschaltung (403_i) Schließen des Schalters (SWi) aufweist, um die Zelle (Ci) in dem Entladewiderstand (Ri) zu entladen.

4. Verfahren nach einem der Ansprüche 1 bis 3, wobei die Entladeschaltung so ausgelegt ist, dass sie die Zelle (Ci) in eine oder mehrere andere Zellen der Batterie entlädt.

5. Verfahren nach einem der Ansprüche 1 bis 4, das ferner aufweist, wenn die Temperatur der Zelle den ersten Schwellenwert (T0) überschreitet, parallel zum Aktivieren des Entladungsschaltkreises ein akustisches und/oder visuelles Signal für die Aufmerksamkeit des Benutzers zu übermitteln.

6. Elektronische Vorrichtung zum Handhaben einer elektrischen Batterie, die eine oder mehrere Elementarzellen (Ci) zum Speichern von elektrischer Energie aufweist, wobei diese Vorrichtung so konfiguriert ist, dass sie ein Verfahren zum Steuern nach einem der Ansprüche 1 bis 5 ausführt.

7. Elektrische Batterie mit einer oder mehreren Elementarzellen (Ci) zum Speichern von elektrischer Energie und mit einer elektronischen Handhabungsvorrichtung, die so konfiguriert ist, dass sie ein Verfahren zum Steuern nach einem der Ansprüche 1 bis 5 ausführt.

## Claims

1. Method for controlling an electric battery comprising one or more elementary cells (Ci) for storing electrical energy, this method including, for each cell (Ci), the following steps:
a) measuring a quantity representative of the temperature (T) of the cell;
b) measuring a quantity representative of the state of charge of the cell;
c) determining, as a function of the state of charge of the cell using a predetermined mathematical function or a predetermined correlation table, a first predetermined threshold (T0) corresponding to a temperature of occurrence of a thermal runaway of the cell; and
when the temperature of the cell exceeds the first threshold (T0), activating a discharge circuit (403_i) of the cell.

2. Method according to claim 1, wherein the first threshold (T0) is a decreasing function of the state of charge of the cell (Ci).

3. Method according to claim 1 or 2, wherein the discharge circuit (403_i) of each cell (Ci) comprises, between a positive terminal and a negative terminal of the cell, a series association of a switch (SWi) and a discharge resistor (Ri), activating the discharge circuit (403_i) comprising closing the switch (SWi) so as to discharge the cell (Ci) in the discharge resistor (Ri).

4. Method according to any one of claims 1 to 3, wherein the discharge circuit is adapted to discharge the cell (Ci) into one or more other cells of the battery.

5. Method according to any one of claims 1 to 4, further comprising, when the temperature of the cell exceeds the first threshold (T0), in parallel with activating the discharge circuit, transmitting a sound and/or visual signal to the attention of the user.

6. Electronic device for managing an electric battery comprising one or more elementary cells (Ci) for storing electrical energy, this device being configured to implement a method for controlling according to any one of claims 1 to 5.

7. Electric battery including one or more elementary cells (Ci) for storing electrical energy, and an electronic management device configured to implement a method for controlling according to any one of claims 1 to 5.
